# EUROPÄISCHE PATENTSCHRIFT

(11) **EP 0 857 533 B1**
(45) Veröffentlichungstag und Bekanntmachung des Hinweises auf die Patenterteilung: **20.08.2003**
(21) Anmeldenummer: 98101919.3
(22) Anmeldetag: 04.02.1998
(51) Int. Cl.: B23K 9/173

(54) **Metallschutzgasschweissen mit Sprühlichtbogen**
MAG welding using a spraying arc
Soudage avec gaz de protection et arc pulvérisant

(30) Priorität: 06.02.1997 DE 19704511
(43) Veröffentlichungstag der Anmeldung: 12.08.1998
(73) Patentinhaber: Linde AG, 65189 Wiesbaden (DE)
(72) Erfinder: Trube, Stefan, Dr. Dr.-Ing., 81669 München (DE)
(74) Vertreter: Kasseckert, Rainer

(56) Entgegenhaltungen:
- LU-A- 33 543
- N.STENBACKA ET AL.: "Shielding gases for gas metal arc welding" WELDING JOURNAL, Bd. 68, Nr. 11, November 1989, MIAMI ( USA ), Seiten 41-47, XP000074693

## Beschreibung

Die Erfindung betrifft ein Verfahren zum Metallschutzgasschweißen mit einem zwischen einer abschmelzenden Drahtelektrode und einem metallischen Werkstück ausgebildeten Sprühlichtbogen unter Zufuhr eines im wesentlichen aus Argon oder aus Argon und Helium bestehenden Schutzgases.

Das Metallschutzgasschweißen wurde in den letzten Jahren ständig weiter entwickelt. Dabei wurde insbesondere versucht, den Hochleistungsbereich, d.h. den Schweißbereich mit besonders hohen Abschmelzleistungen, in seinen Parametern detailliert zu erfassen, um den Schweißprozeß auch im Hochleistungsbereich zu beherrschen und damit einer praktischen Nutzung zugänglich zu machen.

Vor allem im Bereich des Hochleistungsschweißens werden hinsichtlich der Lichtbogenart verschiedene Schweißverfahren unterschieden. Neben dem konventionellen Sprühlichtbogen, dem Hochleistungs-Kurzlichtbogen und dem Hochleistungs-Sprühlichtbogen bei höheren Drahtvorschubgeschwindigkeiten tritt auch ein rotierender Sprühlichtbogen auf. Den konventionellen Sprühlichtbogen kennzeichnet ein axialer, kurzschlußfreier Werkstoffübergang. Vom Hochleistungs-Sprühlichtbogen mit einem axialen tropfenförmigen Werkstoffübergang gelangt man zum rotierenden Lichtbogen vor allem durch Erhöhung der Schweißspannung, aber auch durch Erhöhung der Drahtvorschubgeschwindigkeit. Die Rotation des Lichtbogens setzt beim Sprühlichtbogen ein, wenn das Drahtende durch die hohe Strombelastung erweicht und aufgrund der vorhandenen Lichtbogenkräfte ausgelenkt wird.

Im Hochleistungsbereich treten Schweißfehler insbesondere dadurch auf, daß der Sprühlichtbogen bzw. der Hochleistungs-Sprühlichtbogen in einen rotierenden Lichtbogen übergeht. Die Rotation des Lichtbogens ist dabei in aller Regel gerade nicht stabil, sondern instabil. Bereits ein kurzzeitiges Umspringen von einer Lichtbogenart zur anderen innerhalb eines Schweißprozesses kann aber bereits unzulässige Schweißnahtfehler hervorrufen. Dieses Verhalten wurde durch zahlreiche Versuche bestätigt.

Die Instabilität des Lichtbogens und die damit einhergehenden Schweißfehler stehen einem industriellen Einsatz des Sprühlichtbogens im Wege, da dieser Einsatz in der Regel eine hohe Schweißgüte verlangt

Es wurden zahlreiche Untersuchungen unternommen, die Bedingungen zu finden und zu definieren, die zu einem qualitativ hochwertigen, leistungsfähigen und reproduzierbaren Schweißprozeß entscheidend beitragen. Das Grundproblem beim Metallschutzgasschweißen vor allem im mit Blick auf den industriellen Einsatz besonders interessanten Hochleistungsbereich bestand darin, daß aber daraus nicht ohne weiteres die erhofften Erkenntnisse gezogen werden konnten, da die Ergebnisse undurchsichtig und zum Teil widersprüchlich waren oder zumindest erschienen.

Unter der Bezeichnung T.I.M.E.® ist ein MAG-Hochleistungsschweißverfahren bekannt, wobei ein Gasgemisch mit 65 % Argon, 26,5 % Helium, 8 % CO₂ und 0,5 % Sauerstoff verwendet wird (z.B. deutsches Patent DE 33 28 272). Diese Gasmischung wird üblicherweise als T.I.M.E.®-Gas bezeichnet. Beim Einsatz des T.I.M.E.®-Gases wie auch bei anderen Gasen kommt es jedoch vor allem im Bereich von Drahtvorschüben oberhalb etwa 20 m/min bei einer Drahtelektrode mit einem Durchmesser von 1,2 mm oder oberhalb etwa 15 m/min bei einer Drahtelektrode mit einem Durchmesser von 1,0 mm oftmals zu Instabilitäten des Lichtbogens.

Aus der US-A-4 645 903 ist ein Verfahren zum Metallschutzgasschweißen mit Sprühlichtbogen bekannt, bei dem ein Schutzgasgemisch aus 8 bis 15 Vol.-% CO₂, 1 bis 2 Vol.-% O₂ und restlich Argon verwendet wird. In diesem Verfahren wird die abschmelzende Drahtelektrode mit einem Durchmesser von 0.035 inch (etwa 0,9 mm) mit einer Vorschubgeschwindigkeit von 600 inch/minute bis 1500 inch/minute (etwa 15 bis etwa 38 m/min) und die abschmelzende Drahtelektrode mit einem Durchmesser von 0.045 inch (etwa 1,0 mm) mit einer Vorschubgeschwindigkeit von 390 inch/minute bis 875 inch/minute (etwa 10 bis etwa 22 m/min) zum Werkstück hingeführt wird.

In dem Artikel "Shielding gas for gas metal arc welding", erschienen in Welding Journal, Bd. 68, Nr. 11, november 1989, Miami (USA), Seiten 41-47 wird das Verhalten von verschieden Lichtbogenarten beschrieben. Für einen Sprühlichtbogen werden bei einer Drahtvorschubgeschwindigkeit von 12 m/min in diesem Artikel Gasmischungen aus Argon und 20 Vol.-% Kohlendioxid, Argon und 8 Vol.-% Sauerstoff sowie Argon und 5 Vol.-% Kohlendioxid und 5 Vol.-% Sauerstoff vorgestellt. Dieser Artikel wird als nüchster Stand der Technik angesehen.

Der Erfindung liegt daher die Aufgabe zugrunde, ein Verfahren der eingangs genannten Art aufzuzeigen, welches ein Schweißen von Metallen unter Schutzgas mit einem stabilen nicht-rotierenden Sprühlichtbogen zur Verfügung stellt. Das Metallschutzgasschweißverfahren soll dabei einerseits für eine manuelle Brennerführung und andererseits insbesondere für eine maschinelle Brennerführung geeignet sein. Das erfindungsgemäße Schutzgasschweißverfahren sollte möglichst die Herstellung extrem porenarmer Schweißgüter mit einem sehr tiefen Einbrand gerade auch bei einer hohen Abschmelzleistung und mit hoher Güte ermöglichen.

Diese Aufgabe wird erfindungsgemäß dadurch gelöst, daß eine Drahtvorschubgeschwindigkeit zwischen 15 und 30 m/min eingestellt und entweder ein Schutzgas mit 16 bis 50 Vol.-% CO₂, 0,5 bis 5 Vol.-% O₂ und restlich Argon oder ein Schutzgas mit 16 bis 50 Vol.-% CO₂, 0 bis 5 Vol.-% O₂, 10 bis 40 Vol.-% Helium und restlich Argon verwendet wird.

Der Erfindung liegt die wesentliche Erkenntnis zugrunde, daß die Drahtvorschubgeschwindigkeit und die Zusammensetzung des Schutzgases entscheidend das Verhalten des Lichtbogens im Hinblick auf mögliche Instabilitäten des Lichtbogens beeinflussen. Die Stabilität des Lichtbogens beim Metallschutzgasschweißen mit einem Sprühlichtbogen kann gewährleistet werden, wenn die Drahtvorschubgeschwindigkeit im genannten Bereich liegt und sich das Schutzgas aus den genannten Komponenten mit den obengenannten Anteilen zusammensetzt. Bei Einhalten der Parameter des erfindungsgemäßen Verfahrens läßt sich ein Schweißen mit stabilem Lichtbogen im Bereich hoher Abschmelzleistungen mit hoher Qualität und Güte verifizieren. Die Kombination der Parameter sorgt und garantiert dabei für die geforderte Stabilität des Lichtbogens. Sie führt zu einer Reproduzierbarkeit des Metallschutzgasschweißen auch und gerade im Hochleistungsbereich. Der Zusammensetzung des Schutzgasgemisches kommt dabei eine besondere Rolle zu.

Das erfindungsgemäße Verfahren ist grundsätzlich nicht auf bestimmte Elektrodendurchmesser beschränkt, so daß alle bekannten Drahtelektroden (Durchmesser von 0,8 bis 1,6 mm) im erfindungsgemäßen Schweißverfahren einsetzbar sind. Hervorragend eignen sich Drahtelektroden mit einem Durchmesser von 1,0 und insbesondere mit dem bevorzugten Durchmesser von 1,2 mm. Beim Einsatz einer Drahtelektrode mit kleinerem Durchmesser empfiehlt sich eine Drahtvorschubgeschwindigkeit im unteren Bereich, für größere Durchmesser eine höhere Drahtvorschubgeschwindigkeit.

Das erfindungsgemäße Schutzgasgemisch weist einen verhältnismäßig hohen Anteil an CO₂ auf. Es wurde erkannt, daß ein derartig hoher CO₂-Anteil sich deutlich rotationsunterdrückend auf den Lichtbogen auswirkt. In vorteilhafter Ausgestaltung der Erfindung enthält das Schutzgas 18 bis 40 Vol.-% CO₂, vorzugsweise 20 bis 40 Vol.-% CO₂, besonders bevorzugt 23 bis 30 Vol.-% CO₂.

Durch die Zumischung von Helium zum Schutzgas wird aufgrund seiner günstigen Wärmeleit- und Wärmeübergangseigenschaften ein breiterer Einbrand erzielt, indem die Flanken der Schweißnaht verstärkt aufgeschmolzen werden und bei einem kurzzeitigen Vorlaufen des Schmelzbades Flankenbindefehler vermieden werden. In Ausgestaltung des erfindungsgemäßen Verfahrens enthält das Schutzgas 15 bis 35 Vol.-% Helium, vorzugsweise 20 bis 30 Vol.-% Helium.

Erfindungsgemäß können dem Schutzgas kleinere Anteile Sauerstoff beigemischt sein. Sauerstoff weist ein niedriges Ionisationspotential auf und verbessert so die Leitfähigkeit des Plasmas. Das unterstützt zusätzlich die Stabilität des Lichtbogens. Bei einem zu hohen Sauerstoffgehalt steigt allerdings die Tendenz des Lichtbogens zu rotieren. In Ausgestaltung der Erfindung wird daher vorgeschlagen, daß der Sauerstoffanteil des Schutzgases 0,5 bis 4 Vol.-%, vorzugsweise zwischen 1 und 3 Vol.-% beträgt.

Üblicherweise wird die Drahtelektrode durch ein Kontaktrohr geführt. Mit dem erfindungsgemäßen Verfahren sind besondere Vorteile dadurch zu erzielen, daß ein Abstand zwischen Kontaktrohr und Werkstück von 20 bis 35 mm eingehalten wird.

Drahtvorschubgeschwindigkeiten zwischen 18 und 25 m/min führen zu besonders guten Ergebnissen beim Schweißen unter den Bedingungen des erfindungsgemäßen Verfahrens.

Aber auch durch die Drahtlektrode selbst ist die Stabilität des Lichtbogens und die Qualität und Güte der Schweißung beeinflußbar.

So haben sich Drahtelektroden aus einem ferromagnetischen Material bestens bewährt. Vorteile ergeben sich dadurch, daß als Drahtelektrode ein Massivdraht eingesetzt wird. Massivdrähte führen zu deutlich verbesserten Ergebnissen als Fülldrähte mit Füllungen aus Schlacke (basische oder Rutil) und/oder Metallpulver.

Außerdem hat sich anhand von Versuchen herausgestellt, daß sich Drahtelektroden mit einem Anteil von 0,3 bis 1,3 Gew.-% Si, vorzugsweise 0,7 bis 1,2 Gew.-% Si hervorragend eignen. Zusätzlich können im Draht Kohlenstoff (vorzugsweise 0,04 bis 0,14 C) und Mangan (vorzugsweise 0,8 bis 2,10 Gew.-% Mn) enthalten sein.

Schließlich kann sich auch eine auf der Oberfläche verkupferte Drahtelektrode für das erfindungsgemäße Verfahren positiv auswirken, da aufgrund der guten Leitfähigkeit des Kupfers einerseits der Spannungsabfall im Kontaktrohr verringert und andererseits der Stromübergang verbessert werden kann. Ferner dient die Verkupferung der Verbesserung der Gleitfähigkeit des Drahtes, was die Drahtzufuhr vor allem bei hohen Drahtvorschubgeschwindigkeiten spürbar erleichtert. Es hat sich gezeigt, daß eine gleichmäßige Verkupferung die Stabilität des Lichtbogens unterstützt.

## Patentansprüche

1. Verfahren zum Metallschutzgasschweißen mit einem zwischen einer abschmelzenden Drahtelektrode und einem metallischen Werkstück ausgebildeten stabilen nicht-rotierenden Sprühlichtbogen unter Zufuhr eines im wesentlichen aus Argon oder aus Argon und Helium bestehenden Schutzgases, **dadurch gekennzeichnet, daß** eine Drahtvorschubgeschwindigkeit zwischen 15 und 30 m/min eingestellt und entweder ein Schutzgas mit 16 bis 50 Vol.-% CO₂, 0,5 bis 5 Vol.-% O₂, und restlich Argon oder ein Schutzgas mit 16 bis 50 Vol.-% CO₂, 0 bis 5 Vol.-% O₂, 10 bis 40 Vol.-% Helium und restlich Argon verwendet wird.

2. Verfahren zum Metallschutzgasschweißen nach Anspruch 1, **dadurch gekennzeichnet, daß** das Schutzgas 18 bis 40 Vol.-% CO₂, vorzugsweise 20 bis 40 Vol.-% CO₂, besonders bevorzugt 23 bis 30 Vol.-% CO₂ enthält.

3. Verfahren zum Metallschutzgasschweißen nach einem der Ansprüche 1 oder 2, **dadurch gekennzeichnet, daß** das Schutzgas 15 bis 35 Vol.-% Helium, vorzugsweise 20 bis 30 Vol.-% Helium enthält.

4. Verfahren zum Metallschutzgasschweißen nach einem der Ansprüche 1 bis 3, **dadurch gekennzeichnet, daß** der Sauerstoffanteil des Schutzgases 0,5 bis 4 Vol.-%, vorzugsweise zwischen 1 und 3 Vol.-% beträgt.

5. Verfahren zum Metallschutzgasschweißen nach einem der Ansprüche 1 bis 4, **dadurch gekennzeichnet, daß** die Drahtelektrode durch ein Kontaktrohr geführt wird und ein Kontaktrohrabstand zum Werkstück von 20 bis 35 mm eingehalten wird.

6. Verfahren zum Metallschutzgasschweißen nach einem der Ansprüche 1 bis 5, **dadurch gekennzeichnet, daß** eine Drahtvorschubgeschwindigkeit zwischen 18 und 25 m/min eingestellt wird.

7. Verfahren zum Metallschutzgasschweißen nach einem der Ansprüche 1 bis 6, **dadurch gekennzeichnet, daß** eine Drahtelektrode aus einem ferromagnetischen Material eingesetzt wird.

8. Verfahren zum Metallschutzgasschweißen nach einem der Ansprüche 1 bis 7, **dadurch gekennzeichnet, daß** als Drahtelektrode ein Massivdraht eingesetzt wird.

9. Verfahren zum Metallschutzgasschweißen nach einem der Ansprüche 1 bis 8, **dadurch gekennzeichnet, daß** eine Drahtelektrode mit einem Anteil von 0,3 bis 1,3 Gew.-% Si, vorzugsweise 0,7 bis 1,2 Gew.-% Si verwendet wird.

10. Verfahren zum Metallschutzgasschweißen nach einem der Ansprüche 1 bis 9, **dadurch gekennzeichnet, daß** eine auf der Oberfläche verkupferte Drahtelektrode eingesetzt wird.

## Claims

1. Process for gas metal arc welding using a stable, non-rotating spray arc which is formed between a melting wire electrode and a metallic work piece, with a shielding gas which substantially comprises argon or argon and helium being supplied, **characterized in that** a wire feed rate of between 15 and 30 m/min is set and either a shielding gas comprising 16 to 50% by volume of CO₂, 0.5 to 5% by volume of O₂, remainder argon or a shielding gas comprising 16 to 50% by volume of CO₂, 0 to 5% by volume of O₂, 10 to 40% by volume of helium, remainder argon is used.

2. Process for gas metal arc welding according to Claim 1, **characterized in that** the shielding gas contains 18 to 40% by volume of CO₂, preferably 20 to 40% by volume of CO₂, particularly preferably 23 to 30% by volume of CO₂.

3. Process for gas metal arc welding according to either of Claims 1 or 2, **characterized in that** the shielding gas contains 15 to 35% by volume of helium, preferably 20 to 30% by volume of helium.

4. Process for gas metal arc welding according to one of Claims 1 to 3, **characterized in that** the oxygen content of the shielding gas is 0.5 to 4% by volume, preferably between 1 and 3% by volume.

5. Process for gas metal arc welding according to one of Claims 1 to 4, **characterized in that** the wire electrode is guided through a contact tube and a contact tube-to-work distance of 20 to 35 mm is maintained.

6. Process for gas metal arc welding according to one of Claims 1 to 5, **characterized in that** a wire feed rate of between 18 and 25 m/min is set.

7. Process for gas metal arc welding according to one of Claims 1 to 6, **characterized in that** a wire electrode made from a ferromagnetic material is used.

8. Process for gas metal arc welding according to one of Claims 1 to 7, **characterized in that** the wire electrode used is a solid wire.

9. Process for gas metal arc welding according to one of Claims 1 to 8, **characterized in that** a wire electrode which contains from 0.3 to 1.3% by weight of Si, preferably from 0.7 to 1.2% by weight of Si, is used.

10. Process for gas metal arc welding according to one of Claims 1 to 9, **characterized in that** a wire electrode which is copper-plated on the surface is used.

## Revendications

1. Procédé de soudure sous gaz de protection à l'aide d'un arc à fusion en pluie stable, non tournant, formé entre une électrode à fil fondante et une pièce métallique, avec apport d'un gaz de protection se composant substantiellement d'argon ou d'argon et d'hélium, **caractérisé en ce que** l'on ajuste une vitesse d'avance du fil comprise entre 15 et 30 m/minute et que l'on utilise soit un gaz de protection ayant de 16 à 50 % en volume de CO₂, de 0,5 à 5 % en volume de O₂, le restant étant de l'argon, soit un gaz de protection ayant de 16 à 50 % en volume de CO₂, de 0 à 5 % en volume de O₂, de 10 à 40 % en volume d'hélium, le restant étant de l'argon.

2. Procédé de soudage sous gaz de protection selon la revendication 1, **caractérisé en ce que** le gaz de protection contient de 18 à 40 % en volume de CO₂, de préférence de 20 à 40 % en volume de CO₂, en particulier de préférence de 23 à 30 % en volume de CO₂.

3. Procédé de soudage sous gaz de protection selon la revendication 1 ou la revendication 2, **caractérisé en ce que** le gaz de protection contient de 15 à 35 % en volume d'hélium, de préférence de 20 à 30 % en volume d'hélium.

4. Procédé de soudage sous gaz de protection selon Tune quelconque des revendications 1 à 3, **caractérisé en ce que** la proportion d'oxygène du gaz de protection est de 0,5 à 4 % en volume, et est, de préférence, comprise entre 1 et 3 % en volume.

5. Procédé de soudage sous gaz de protection selon l'une quelconque des revendications 1 à 4, **caractérisé en ce que** l'électrode à fil est conduite à travers un tube de contact et **en ce qu'**un écart du tube de contact vis-à-vis de la pièce métallique de 20 à 35 mm est respecté.

6. Procédé de soudage sous gaz de protection selon l'une quelconque des revendications 1 à 5, **caractérisé en ce que** la vitesse d'avance du fil est ajustée à une valeur comprise entre 18 et 25 m/minute.

7. Procédé de soudage sous gaz de protection selon l'une quelconque des revendications 1 à 6, **caractérisé en ce que** l'on utilise une électrode à fil faite à partir d'un matériau ferré-magnétique.

8. Procédé de soudage sous gaz de protection selon Tune quelconque des revendications 1 à 7, **caractérisé en ce que** l'on utilise, en tant qu'électrode à fil, un fil massif.

9. Procédé de soudage sous gaz de protection selon l'une quelconque des revendications 1 à 8, **caractérisé en ce que** l'on utilise une électrode à fil ayant une proportion de 0,3 à 1,3 % en poids de Si, de préférence de 0,7 à 1,2 % en poids de Si.

10. Procédé de soudage sous gaz de protection selon l'une quelconque des revendications 1 à 9, **caractérisé en ce que** l'on utilise une électrode à fil cuivrée à la surface.
